(19) Europäisches Patentamt / European Patent Office / Office européen des brevets

(11)  **EP 2 655 107 B1**

(12)  **FASCICULE DE BREVET EUROPEEN**

(45) Date de publication et mention
de la délivrance du brevet:
**26.09.2018  Bulletin 2018/39**

(51) Int Cl.:
**B60H 1/22** *(2006.01)*

(21) Numéro de dépôt: **11782145.4**

(86) Numéro de dépôt international:
**PCT/EP2011/070057**

(22) Date de dépôt: **14.11.2011**

(87) Numéro de publication internationale:
**WO 2012/084341 (28.06.2012 Gazette 2012/26)**

(54)  **SYSTÈME ET PROCÉDÉ DE COMMANDE D'UN ORGANE DE CHAUFFAGE ÉLECTRIQUE ÉQUIPANT UN VÉHICULE AUTOMOBILE**

MIT EINEM SYSTEM UND VERFAHREN FÜR DEN BETRIEB EINER ELEKTRISCHEN HEIZKOMPONENTE AUSGESTATTETES  KRAFTFAHRZEUG

SYSTEM AND METHOD FOR OPERATING AN ELECTRICAL HEATING COMPONENT WITH WHICH A MOTOR VEHICLE IS EQUIPPED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.12.2010  FR 1061067**

(43) Date de publication de la demande:
**30.10.2013  Bulletin 2013/44**

(73) Titulaire: **Renault S.A.S.**
**92100 Boulogne-Billancourt (FR)**

(72) Inventeurs:
• **BOIRON, Daniel**
**F-78960 Voisins Le Bretonneux (FR)**
• **BRAUNSCHWEIG, Vincent**
**F-92260 Fontenay Aux Roses (FR)**
• **LE-LAY, Vincent**
**F-78114 Magny Les Hameaux (FR)**
• **VALENCIENNES, Edouard**
**F-75015 Paris (FR)**

(56) Documents cités:
EP-A1- 2 168 794      WO-A2-2004/108446
FR-A1- 2 802 151

**Description**

Le domaine de l'invention concerne les systèmes de climatisation, et plus particulièrement la limitation de la puissance consommée des systèmes de climatisation pour véhicules automobiles comprenant un compresseur et un organe de chauffage.

Dans un véhicule électrique ou hybride, le chauffage de l'habitacle est généralement réalisé par des composants alimentés par la batterie haute tension. Dans certaines situations (besoin de puissance pour la traction, charge de la batterie faible), il est nécessaire de limiter la puissance consommée pour le confort thermique. De plus, la puissance des organes de chauffage varie en fonction du pays de commercialisation et du climat. Il est donc nécessaire d'ajouter une configuration dépendant du type de climat pour adapter la limitation de puissance des organes de chauffage aux différentes versions existantes. Ce type de configuration est difficile à gérer.

Le document US 6040561 divulgue un système de réseau haute tension et un contrôle de chauffage auxiliaire. Ce document comprend la description de relations entre l'organe de chauffage et le réseau de haute tension. La commande de l'organe de chauffage est modifiée en fonction du niveau de tension du réseau haute tension.

Le document WO 9415805 divulgue un système de climatisation pour véhicule électrique comprenant une boucle froide munie d'un compresseur et une boucle chaude munie d'organes de chauffage. La limitation de la puissance consommée est liée à des paramètres de mise au point pour l'atteinte du confort.

Le document FR 2 802 151 décrit un système de limitation de la puissance consommée par l'organe de chauffage électrique employé dans un véhicule comprenant au moins un moteur électrique de propulsion, suivant le préambule de la revendication 1.

Un objet de l'invention est un système de limitation de la puissance consommée par l'organe de chauffage électrique qui soit indépendant de la puissance du système de chauffage.

Ce but est atteint par les caractéristiques des revendications 1 et 6.

L'invention présente l'avantage de limiter la puissance de l'organe de chauffage et s'adapter automatiquement à la puissance de l'organe de chauffage.

Le moyen de limitation de puissance peut, suivant une première alternative de l'invention, comprendre une cartographie de pourcentage de commande en fonction de la puissance de l'organe de chauffage électrique, et

un amplificateur apte à modifier le signal émis à destination de la cartographie en fonction de la puissance de l'organe de chauffage électrique et de la puissance de l'organe de chauffage électrique ayant servi à établir la cartographie.

Le moyen de limitation de puissance peut, suivant une second alternative de l'invention, une régulation PID.

Le moyen de régulation en température peut être apte à déterminer un signal de commande en fonction de la mesure de température du fluide caloporteur de l'organe de chauffage électrique, de la consigne de température du fluide caloporteur de l'organe de chauffage électrique et de la limitation du signal de commande.

Le moyen de régulation en température peut comprendre une régulation PID.

Le moyen de limitation de puissance est être relié en série au moyen de régulation en température.

Le moyen de limitation de puissance peut être relié en parallèle au moyen de régulation en température.

Selon un autre aspect de l'invention, il est proposé un procédé de commande d'un organe de chauffage électrique équipant un véhicule automobile comprenant un organe de chauffage électrique, l'organe de chauffage électrique comprenant un circuit de fluide caloporteur, dans lequel on élabore un signal de commande en fonction d'une mesure de température du fluide caloporteur de l'organe de chauffage électrique, d'une consigne de température du fluide caloporteur de l'organe de chauffage électrique, suivant les caractéristiques de la revendication 6.

D'autres buts, caractéristiques et avantages apparaîtront à la lecture de la description suivante donnée uniquement en tant qu'exemple non limitatif, et faite en référence aux dessins annexés sur lesquels :

- la figure 1 illustre les principaux éléments d'un moyen de limitation de puissance selon un mode de réalisation,
- la figure 2 illustre les principaux éléments d'un moyen de limitation de puissance selon un autre mode de réalisation,
- la figure 3 illustre un mode de réalisation d'un moyen de régulation de température,
- la figure 4 illustre les principaux éléments d'un système de commande comprenant un montage en série d'un moyen de limitation de puissance et d'un moyen de régulation de température, et
- la figure 5 illustre les principaux éléments d'un moyen de limitation de puissance selon un mode de réalisation alternatif.

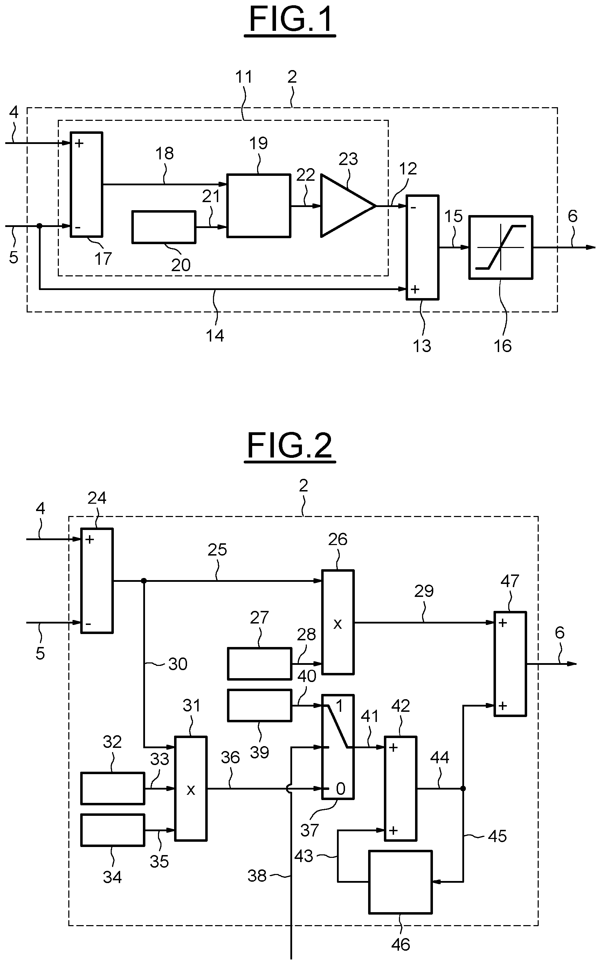

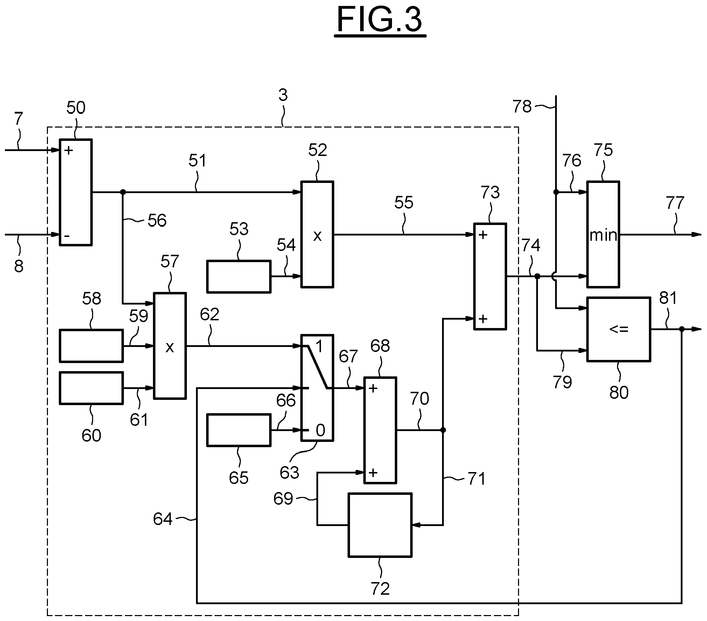

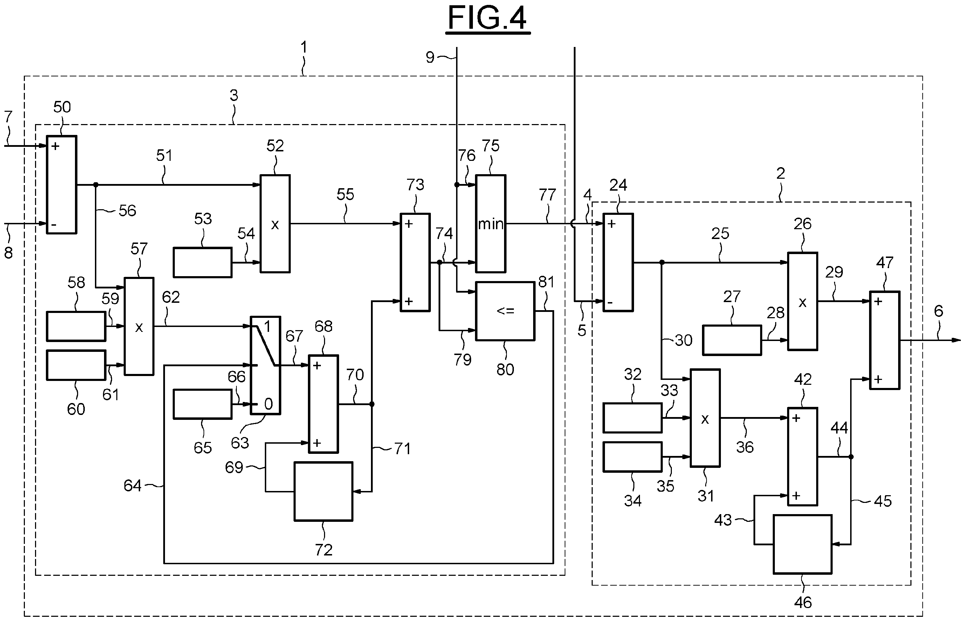

Le système de commande 1 d'un organe de chauffage électrique pour véhicule automobile comprend un moyen de limitation 2 de puissance et un moyen de régulation 3 de température. Les deux moyens collaborent afin de déterminer un signal de commande à destination d'un organe de chauffage électrique. Par organe de chauffage électrique, on entend tout moyen apte à chauffer un fluide caloporteur tel qu'un flux d'air ou un liquide, destinés à la production d'air pour chauffer l'habitacle d'un véhicule automobile. Parmi les organes de chauffage, on citera notamment les dispositifs à coefficient à température positive qui comprennent des céramiques s'échauffant lors de l'application d'un courant électrique. Le signal de commande tient compte d'une mesure de température de fluide caloporteur de l'organe de chauffage électrique, d'une consigne de température de fluide caloporteur de l'organe de chauffage électrique, d'une mesure de puissance de l'organe de chauffage électrique et d'une puissance autorisée de l'organe de chauffage électrique. Les figures 1, 2 et 5 illustrent différents modes de réalisation d'un moyen de limitation 2 de puissance et la figure 3 illustre un mode de réalisation d'un moyen de régulation 3 de température. Les modes de réalisation du moyen de limitation 2 de puissance et du moyen de régulation 3 de température sont destinés à coopérer en un montage en parallèle. La figure 4 illustre un mode de réalisation d'un système de commande 1 comprenant un montage en série du moyen de limitation 2 de puissance et du moyen de régulation 3 de température.

Sur la figure 1, on peut voir un moyen de limitation 2 de puissance consommée par l'organe de chauffage électrique, comprenant une première entrée 4 portant une mesure de puissance de l'organe de chauffage électrique, une deuxième entrée 5 portant une puissance autorisée de l'organe de chauffage électrique. Le moyen de limitation 2 de puissance comprend une sortie 6 portant une limitation du signal de commande de l'organe de chauffage électrique.

Le moyen de limitation 2 de puissance comprend par ailleurs un moyen de normalisation 11 relié à la première entrée 4 et à la deuxième entrée 5, relié en sortie par la connexion 12 à un premier soustracteur 13. Une autre entrée du premier soustracteur 13 est reliée à une dérivation 14 de la deuxième entrée 5. Le premier soustracteur 13 émet en sortie un signal issu de la soustraction du signal de sortie du moyen de normalisation 11 du signal reçu de la deuxième entrée 5.

Une cartographie 16 reçoit par la connexion 15 le signal issu du premier soustracteur 13 et est reliée en sortie à la sortie 6.

Le moyen de normalisation 11 comprend un deuxième soustracteur 17 émettant par la connexion 18 un signal correspondant au signal reçu de la première entrée 4 moins le signal reçu de la deuxième entrée 5.

Le moyen de normalisation 11 comprend également un comparateur 19 qui reçoit un signal d'une mémoire 20 par la connexion 21 et le signal émis par le deuxième soustracteur 17.

Le comparateur 19 émet en sortie par la connexion 22 un signal correspondant à la plus grande valeur parmi les signaux reçus en entrée. Un amplificateur 23 émet par la sortie 12 un signal correspondant au signal d'entrée, reçu de la connexion 22, multiplié par un nombre correspondant au gain.

Le moyen de limitation 2 de puissance décrit dans ce mode de réalisation comprend une cartographie 16 correspondant à une puissance maximale de l'organe de chauffage électrique. Par le biais du moyen de normalisation 11, le moyen de limitation 2 de puissance est capable d'utiliser la cartographie 16 lorsque l'organe de chauffage électrique utilisé est d'une puissance supérieure à la puissance maximale de l'organe de chauffage électrique ayant servi à la réalisation de la cartographie 16.

Dans le cas où l'organe de chauffage électrique présente une puissance maximale proche de la puissance autorisée, la différence entre la mesure de puissance et la consigne de puissance est négative ou nulle. En considérant le paramètre contenu dans la mémoire 20 égal à zéro, on a une valeur nulle en sortie du comparateur 19 et de l'amplificateur 23. La valeur de puissance entrant dans la cartographie 16 est donc la consigne de puissance provenant de la deuxième entrée 5.

Dans le cas où l'organe de chauffage électrique présente une puissance maximale supérieure à la puissance autorisée, la différence entre la mesure de puissance et la consigne de puissance est positive. En considérant le paramètre contenu dans la mémoire 20 égal à zéro, on a une valeur non nulle en sortie du comparateur 19 et de l'amplificateur 23. La valeur de puissance entrant dans la cartographie 16 est donc la consigne de puissance provenant de la deuxième entrée 5 diminuée de la valeur émise en sortie de l'amplificateur 23. Le signal entrant dans la cartographie 16 est donc réduit de façon à tenir compte de la puissance supérieure de l'organe de chauffage électrique par rapport à la puissance de l'organe de chauffage électrique de référence.

L'amplificateur 23 applique un gain G afin d'obtenir la convergence de la puissance mesurée vers la puissance autorisée. Le gain G va être estimé ci-dessous.

On peut modéliser le chauffage par transfert par l'équation suivante :

$$\frac{PUmes}{PWMmax} = \frac{K}{1 + \tau \cdot s} \qquad (Eq. \ 1)$$

avec PUmes : la puissance mesurée de l'organe de chauffage électrique
PWMmax : limitation du signal de commande
$\tau$ : la constante de temps du système
s : la variable de Laplace
K : le gain de l'organe de chauffage électrique.

Par gain de l'organe de chauffage électrique, on entend le rapport entre la puissance maximale de l'organe de chauffage électrique et la puissance correspondant au signal de commande.

Lorsqu'il y a une limitation de la puissance autorisée, la puissance mesurée s'écrit de la façon suivante :

$$PUmes = \frac{K}{1+\tau \cdot s} \cdot PWMmax \qquad (Eq.\ 2)$$

$$PUmes = \frac{K}{1+\tau \cdot s} \cdot \left(C \cdot \left(PUaut - G \cdot \left(PUmes - PUaut\right)\right)\right) \qquad (Eq.\ 3)$$

$$\frac{PUmes}{PUaut} = \frac{K \cdot C \cdot \left(1+G\right)}{1+K \cdot C \cdot G + \tau \cdot s} \qquad (Eq.\ 4)$$

avec PUaut : la puissance autorisée de l'organe de chauffage électrique.

Le but de l'utilisation d'un amplificateur est de voir converger la puissance mesurée vers la puissance autorisée. Le rapport entre la puissance mesurée et la puissance autorisée doit donc converger vers la valeur 1.

$$\frac{PUmes}{PUaut} \to 1 \qquad (Eq.\ 5)$$

En considérant le régime statique, l'équation Eq. 4 est simplifiée et devient :

$$\frac{PUmes}{PUaut} = \frac{K \cdot C \cdot \left(1+G\right)}{1+K \cdot C \cdot G} \qquad (Eq.\ 6)$$

Pour que $\frac{PUmes}{PUaut}$ tende vers la valeur 1, il faut que G soit grand PUaut devant la valeur 1. Si on pose par exemple K=50 et C=0.25, une valeur de G=1 donne un rapport $\frac{PUmes}{PUaut}$ de 1.85, une valeur G=10 donne un rapport $\frac{PUmes}{PUaut}$ de 1.09 et une valeur de G=100 donne un rapport PUaut $\frac{PUmes}{PUaut}$ de 1.01.

Il existe toutefois un risque de prendre une valeur de G trop grande ce qui peut générer des sauts de commande importants pouvant mener à des oscillations du système. Compte tenu des valeurs K et C données précédemment, la valeur G=10 est une bonne valeur.

Sur la figure 2, on peut voir un autre mode de réalisation d'un moyen de limitation 2 de puissance relié en entrée à la première entrée 4 et à la deuxième entrée 5, et relié à une sortie 6. Le moyen de limitation 2 de puissance comprend un troisième soustracteur 24 émettant en sortie par la connexion 25 la différence entre le signal reçu de la première entrée 4 et le signal reçu de la deuxième entrée 5.

Un premier multiplicateur 26 reçoit en entrée un signal provenant de la connexion 25 et par une connexion 28 un signal provenant d'une mémoire 27 comprenant un terme proportionnel de type PID. Le premier multiplicateur 26 émet en sortie un signal par la connexion 29.

Un deuxième multiplicateur 31 reçoit en entrée le signal émis en sortie du troisième soustracteur 24 par une dérivation 30 de la connexion 25. Le deuxième multiplicateur 31 reçoit également un terme intégral de type PID contenu dans une mémoire 32 par une connexion 33, un terme TS contenu dans une mémoire 34 par une connexion 35. Le terme TS correspond à la constante de temps du système. Le deuxième multiplicateur 31 émet en sortie un signal par la connexion 36. Un premier commutateur 37 reçoit sur son entrée de commande le signal provenant d'une connexion 38 portant le choix de régulation. Le premier commutateur 37 reçoit par ailleurs le signal porté par la connexion 36 sur une entrée commutée, et sur une autre entrée commutée un signal correspondant à la valeur zéro stockée dans une mémoire 39 par la connexion 40. Selon le signal reçu sur la borne de commande, l'un ou l'autre des signaux de données sont émis en sortie par la connexion 41.

Un premier sommateur 42 reçoit en entrée le signal porté par la connexion 41 ainsi qu'un signal porté par une connexion 43. Le premier sommateur 42 émet en sortie un signal sur la connexion 44. Une dérivation 45 de la connexion 44 est reliée à un moyen d'intégration 46 lui-même relié à la connexion 43. La dérivation 45, le moyen d'intégration 46 et la connexion 43 forment une boucle de contre-réaction.

Un deuxième sommateur 47 relié à la sortie 6 reçoit en entrée les signaux issus des connexions 26 et 44.

Le moyen de limitation 2 de puissance assure la convergence de la mesure de puissance de l'organe de chauffage électrique vers la puissance autorisée de l'organe de chauffage électrique. Il permet également de remplacer la cartographie 16 du premier mode de réalisation.

Le moyen de limitation 2 de puissance repose sur une architecture de type PID. Le premier multiplicateur 26 permet de déterminer le terme proportionnel de l'architecture PID tandis que le deuxième multiplicateur 31, le premier sommateur 42 et la boucle de contre-réaction (45, 46, 43) permettent de déterminer le terme intégral. Les termes intégral et proportionnel sont sommés par le deuxième sommateur 47 pour former le signal de limitation du signal de commande de l'organe de chauffage électrique émis par la connexion 53.

Si le signal de choix de régulation, reçu par le premier commutateur 37, porte une valeur correspondant à une régulation en température, la valeur zéro est émise en sortie du premier commutateur 37. Sinon la valeur issue du deuxième multiplicateur 31 est émise en sortie du premier commutateur 37. Cette logique permet l'économie du calcul du terme intégral lorsque le moyen de limitation 2 de puissance est suivi d'un moyen de régulation 3 de température tel qu'illustré sur la figure 3.

Sur la figure 3, on peut voir un moyen de régulation 3 de température apte à asservir la température de fluide caloporteur de l'organe de chauffage électrique à la température de consigne en tenant compte notamment de la limitation du signal de commande de l'organe de chauffage électrique.

Le moyen de régulation 3 de température reçoit sur une troisième entrée 7 la consigne de température et sur une quatrième entrée 8 la mesure de température. Un quatrième soustracteur 50 réalise la différence entre le signal reçu de la troisième entrée 7 moins le signal reçu de la quatrième entrée 8. Le quatrième soustracteur 50 est relié en sortie à une connexion 51. Un troisième multiplicateur 52 est connecté en entrée à la connexion 51 et à une connexion 54 portant un signal proportionnel de type PID stocké dans une mémoire 53. Le troisième multiplicateur 52 est connecté en sortie à la connexion 55.

Un quatrième multiplicateur 57 est relié en entrée à la dérivation 56 de la connexion 51, à une connexion 59 provenant d'une mémoire 58 contenant un terme intégral de type PID, et à une connexion 61 provenant d'une mémoire 60 contenant le terme TS. Le quatrième multiplicateur 57 est relié en sortie à la connexion 62.

Un deuxième commutateur 63 est relié par son entrée de commande à la connexion 64, par une première entrée de données à la connexion 62, et par une deuxième entrée de données à une connexion 66 provenant d'une mémoire 65 comprenant la valeur zéro. Le deuxième commutateur 63 est relié en sortie à la connexion 67.

Un troisième sommateur 68 reçoit en entrée le signal porté par la connexion 67 ainsi qu'un signal porté par une connexion 69. Le troisième sommateur 68 émet en sortie un signal sur la connexion 70. Une dérivation 71 de la connexion 70 est reliée à un moyen d'intégration 72 lui-même relié à la connexion 69. La dérivation 71, le moyen d'intégration 72 et la connexion 69 forment une boucle de contre-réaction.

Un quatrième sommateur 73 relié en sortie à la connexion 74 reçoit en entrée les signaux issus des connexions 55 et 70.

Un deuxième comparateur 75 est relié en entrée à la connexion 74 et à une connexion 76 portant la limitation du signal de commande de l'organe de chauffage électrique. Le deuxième comparateur 75 émet par la sortie 77 la valeur de signal de commande de l'organe de chauffage électrique.

Un troisième comparateur 80 est connecté en entrée à la connexion 74 par une dérivation 78 et à la connexion 76 par une dérivation 77. Le troisième comparateur 80 émet en sortie par la connexion 81 un signal de choix de régulation. La connexion 64 est une dérivation de la connexion 81.

Le fonctionnement du moyen de régulation 3 de température est similaire au moyen de limitation 2 de puissance, dans la mesure où il repose sur une architecture de type PID permettant d'asservir la mesure de température sur la consigne de température. Le sommateur 52 permet de déterminer le terme proportionnel et, le multiplicateur 57, le sommateur 68 et la boucle de contre-réaction (71, 72, 69) permettent de déterminer le terme intégral.

Par ailleurs, la partie du moyen dédiée au calcul du terme intégral comprend un deuxième commutateur 63 permettant d'annuler le terme intégral selon le signal reçu sur l'entrée de commande portant le choix de régulation.

Si le signal sur l'entrée de commande, reçu par le deuxième commutateur 63, porte une valeur correspondant à une régulation en puissance, la valeur zéro est émise en sortie du deuxième commutateur 63. Sinon la valeur issue du multiplicateur 57 est émise en sortie du deuxième commutateur 63. Cette logique permet l'économie du calcul du terme intégral lorsque le moyen de régulation en température est suivi d'un moyen de limitation de puissance.

Le deuxième comparateur 75 permet d'émettre un signal de commande de l'organe de chauffage électrique correspondant à la valeur minimale parmi la valeur reçue de la régulation en température par l'intermédiaire du quatrième sommateur 73, et la valeur de limitation du signal de commande de l'organe de chauffage électrique reçue par la connexion 76. La limitation du signal de commande de l'organe de chauffage électrique reçue du moyen de limitation en puissance est ainsi limitée à son tour par la valeur issue du moyen de régulation en température, si la valeur issue du moyen de régulation en température est inférieure à la valeur du moyen de limitation en puissance.

Le comparateur 80 permet de générer le signal de choix de régulation en comparant la valeur reçue de la régulation en température par l'intermédiaire du quatrième sommateur 73, et la valeur de limitation du signal de commande de l'organe de chauffage électrique reçue par la connexion 76. Si la valeur de limitation du signal de commande de l'organe de chauffage électrique reçue par la connexion 76 est inférieure ou égale à la valeur reçue de la régulation en température par l'intermédiaire du quatrième sommateur 73, le choix de régulation correspond à une régulation en puissance, sinon le choix de régulation correspond à une régulation en température.

Sur la figure 4, on peut voir un système de commande 1 comprenant un moyen de régulation 3 de température dont la sortie est connectée à l'entrée d'un moyen de limitation 2 de puissance.

Le moyen de régulation 3 de température reçoit sur une troisième entrée 7 la consigne de température et sur une quatrième entrée 8 la mesure de température. Un quatrième soustracteur 50 réalise la différence entre le signal reçu de la troisième entrée 7 moins le signal reçu de la quatrième entrée 8. Le quatrième soustracteur 50 est relié en sortie à une connexion 51. Un troisième multiplicateur 52 est connecté en entrée à la connexion 51 et à une connexion 54 portant un signal proportionnel de type PID stocké dans une mémoire 53. Le troisième multiplicateur 52 est connecté en sortie à la connexion 55.

Un quatrième multiplicateur 57 est relié en entrée à la dérivation 56 de la connexion 51, à une connexion 59 provenant d'une mémoire 58 contenant un terme intégral de type PID, et à une connexion 61 provenant d'une mémoire 60 contenant le terme TS. Le quatrième multiplicateur 57 est relié en sortie à la connexion 62.

Un deuxième commutateur 63 est relié par son entrée de commande à la connexion 64, par une première entrée de données à la connexion 62, et par une deuxième entrée de données à une connexion 66 provenant d'une mémoire 65 comprenant la valeur zéro. Le deuxième commutateur 63 est relié en sortie à la connexion 67.

Un troisième sommateur 68 reçoit en entrée le signal porté par la connexion 67 ainsi qu'un signal porté par une connexion 69. Le troisième sommateur 68 émet en sortie un signal sur la connexion 70. Une dérivation 71 de la connexion 70 est reliée à un moyen d'intégration 72 lui-même relié à la connexion 69. La dérivation 71, le moyen d'intégration 72 et la connexion 69 forment une boucle de contre-réaction.

Un quatrième sommateur 73 relié en sortie à la connexion 74 reçoit en entrée les signaux issus des connexions 55 et 70.

Un deuxième comparateur 75 est relié en entrée à la connexion 74 et à une connexion 76 portant la limitation du signal de commande de l'organe de chauffage électrique. Le deuxième comparateur 75 émet par la sortie 77 la valeur de signal de commande de l'organe de chauffage électrique.

Un troisième comparateur 80 est connecté en entrée à la connexion 74 par une dérivation 78 et à la connexion 76 par une dérivation 79. Le troisième comparateur 80 est connecté en sortie à la connexion 64.

Le moyen de limitation 2 de puissance est relié en entrée à la connexion 77 par la première entrée 4 ainsi qu'à la deuxième entrée 5. Le moyen de limitation 2 de puissance est relié à une sortie 6. Le moyen de limitation 2 de puissance comprend un troisième soustracteur 24 émettant en sortie par la connexion 25 la différence entre le signal reçu de la première entrée 4 et le signal reçu de la deuxième entrée 5.

Un premier multiplicateur 26 reçoit en entrée le signal provenant de la connexion 25 et par la connexion 28 un signal provenant d'une mémoire 27 comprenant un terme proportionnel de type PID. Le premier multiplicateur 26 émet en sortie un signal par la connexion 29.

Un deuxième multiplicateur 31 reçoit en entrée le signal émis en sortie du troisième soustracteur 24 par une dérivation 30 de la connexion 25. Le deuxième multiplicateur reçoit également un terme intégral de type PID contenu dans une mémoire 32 par une connexion 33, un terme TS contenu dans une mémoire 34 par une connexion 35. Le deuxième multiplicateur 31 émet en sortie un signal par la connexion 36.

Un premier sommateur 42 reçoit en entrée le signal porté par la connexion 36 ainsi qu'un signal porté par la connexion 43. Le premier sommateur 42 émet en sortie un signal sur la connexion 44. Une dérivation 45 de la connexion 44 est reliée à un moyen d'intégration 46 lui-même relié à la connexion 43. La dérivation 45, le moyen d'intégration 46 et la connexion 43 forment une boucle de contre-réaction.

Un deuxième sommateur 47 relié en sortie à la connexion 6 et reçoit en entrée les signaux issus des connexions 29 et 44.

Le moyen de limitation 2 de puissance étant disposé en sortie du moyen de régulation 3 de température, il régule la sortie du moyen de régulation 3 de température. Il n'est donc pas nécessaire de recourir à un premier commutateur 37 pour annuler le terme intégral, à la différence du moyen de limitation 2 de puissance illustré par la figure 2.

Le système de commande illustré par la figure 4 présente l'avantage de limiter tous les pics de puissance, de stabiliser le système par le biais d'une boucle rapide pour le contrôle de la puissance et une boucle lente pour le contrôle de la température, ainsi qu'une simplification de la mise au point des deux boucles de régulation par séparation des échelles de temps.

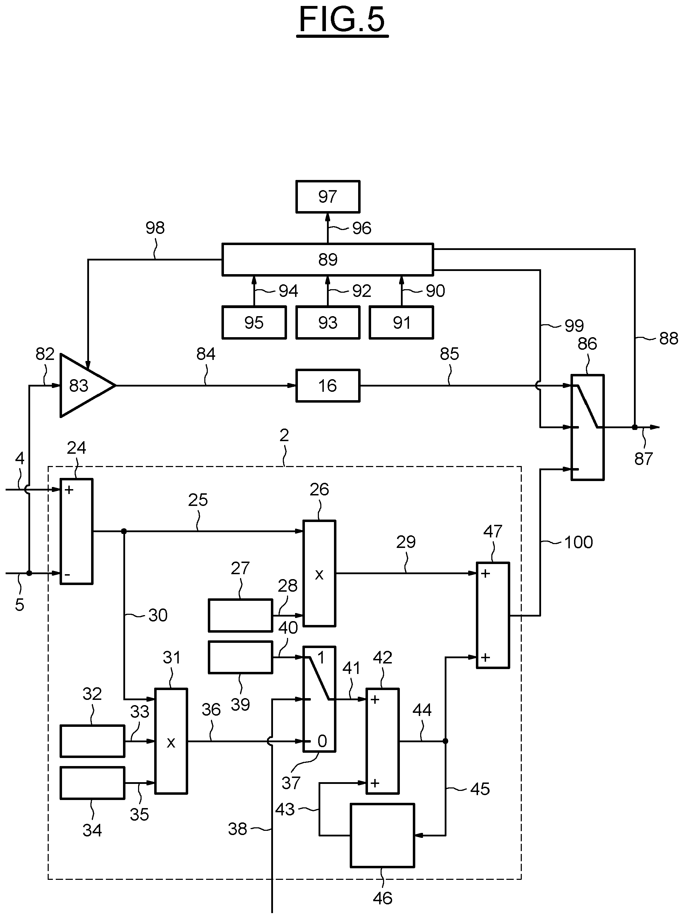

Sur la figure 5, on peut voir une variante du mode de réalisation illustré par la figure 2.

Le moyen de limitation 2 de puissance illustré sur la figure 5 correspond au moyen de limitation 2 de puissance illustré sur la figure 2. La structure et le fonctionnement du moyen de limitation 2 de puissance ne sont donc pas repris ici dans un esprit de concision de la description.

Un amplificateur commandé 83 est relié en entrée à la deuxième entrée 5 par une dérivation 82. L'amplificateur 83 est relié en sortie à la cartographie 16 par une connexion 84. La cartographie 16 est reliée en sortie à une entrée commutée d'un commutateur 86 par une connexion 85. Le commutateur 86 est relié en sortie à une connexion 87. Une dérivation 88 de la connexion 87 est reliée à une entrée d'un moyen de comparaison 89. Le moyen de comparaison 89 est relié en entrée à des mémoires (91, 93, 95) par des connexions 90, 92et 94 réciproquement. Le moyen de comparaison 89 est relié par une connexion birectionnelle 96 avec une mémoire reprogrammable 97, par exemple une mémoire de type EEPROM. Le moyen de comparaison 89 est relié en sortie par la connexion 98 à la borne de commande de l'amplificateur 83 et par la connexion 99 à la borne de commande du commutateur 86.

Le moyen de comparaison 89 compare le signal émis par la sortie 87 à deux valeurs de seuil mémorisées dans des mémoires (91,93) avec des valeurs de puissance correspondantes. Si le signal émis par la sortie 87 est supérieur au premier seuil, on considère que l'organe de chauffage électrique présente une puissance égale à la valeur de puissance mémorisée conjointement au premier seuil. Si le signal émis par la sortie 87 est supérieur au deuxième seuil pendant une durée supérieure à la valeur mémorisée dans la troisième mémoire 95, on considère que l'organe de chauffage électrique présente une puissance égale à la valeur de puissance mémorisée conjointement au deuxième seuil.

Dans les deux cas, la valeur de puissance mémorisée est stockée dans la mémoire reprogrammable 97.

Si la valeur de puissance mémorisée correspond à la puissance mémorisée conjointement au premier seuil, une valeur de gain égale à 1 est émise à destination de l'amplificateur 83 à gain commandé.

Si la valeur de puissance mémorisée correspond à la puissance mémorisée conjointement au premier seuil, une valeur de gain égale au rapport entre le premier seuil divisé par le deuxième seuil est émise à destination de l'amplificateur 83 à gain commandé.

Pour que les relations de comparaison décrites ci-dessus soient valables, il faut que le premier seuil soit supérieur au deuxième seuil.

Lorsqu'une valeur de gain est émise par le moyen de comparaison 89 à destination de l'amplificateur 83, une valeur logique est émise par la connexion 99 à destination du commutateur 86 afin d'économiser le calcul du moyen de limitation de puissance 2. Si aucune valeur n'est émise à destination de l'amplificateur 83, une valeur logique différente est émise à destination du commutateur 86 afin de prendre en compte la valeur émise par le moyen de limitation de puissance 2. Cela est typiquement le cas lors des premières itérations lorsque le moyen de comparaison 89 ne dispose pas de suffisamment de valeur pour effectuer une comparaison fiable.

Le système de commande permet ainsi de limiter la consommation électrique d'un organe de chauffage électrique grâce au moyen de régulation de la température et au moyen de limitation de la puissance consommée. Le système de commande est égale apte à s'adapter à des organes de chauffage présentant des puissances nominales différentes.

## Revendications

1. Système de commande d'un organe de chauffage électrique équipant un véhicule automobile muni d'un groupe motopropulseur comprenant au moins un moteur électrique connecté à une batterie électrique, l'organe de chauffage électrique étant alimenté par la batterie comprenant un circuit de fluide caloporteur, **caractérisé par le fait qu'**il comprend un moyen de limitation de puissance (2) consommée par l'organe de chauffage électrique et un moyen de régulation (3) en température, coopérant afin d'émettre un signal de commande en fonction d'une mesure de température du fluide caloporteur de l'organe de chauffage électrique, et d'une consigne de température du fluide caloporteur de l'organe de chauffage électrique.
   le moyen de limitation de puissance (2) étant apte à déterminer une limitation du signal de commande en fonction d'une mesure de puissance de l'organe de chauffage électrique et d'une puissance autorisée de l'organe de chauffage électrique, ledit système étant **caractérisé en ce que** :

   soit
   le moyen de limitation de puissance (2) comprend une cartographie (16) de signal de commande en fonction de la puissance de l'organe de chauffage électrique,
   et un amplificateur (23) apte à modifier le signal émis à destination de la cartographie (16) en fonction de la puissance de l'organe de chauffage électrique et de la puissance de l'organe de chauffage électrique ayant servi à établir la cartographie,
   soit le moyen de limitation de puissance comprend une régulation PID, une première entrée (4) portant une mesure de puissance de l'organe de chauffage électrique, une deuxième entrée (5) portant une puissance autorisée de l'organe de chauffage électrique, le système comprenant un amplificateur commandé (83) relié en entrée à la deuxième entrée (5) et en sortie à une cartographie (16),

la cartographie (16) étant reliée en sortie à une entrée commutée d'un commutateur (86),

une autre entrée du commutateur (86) étant reliée à la sortie du moyen de limitation de puissance (2)

une dérivation (88) de la connexion (87) en sortie du commutateur (86) est reliée à une entrée d'un moyen de comparaison (89),

le moyen de comparaison (89) étant relié en entrée à des mémoires (91, 93, 95) et à une mémoire reprogrammable (97) par une connexion birectionnelle (96),

les mémoires (91, 93, 95) comprenant un premier seuil, un deuxième seuil supérieur au premier seuil et une durée de seuil,

la mémoire reprogrammable (97) comprenant une valeur de puissance mémorisée,

le moyen de comparaison (89) étant relié en sortie à la borne de commande de l'amplificateur (83) et à la borne de commande du commutateur (86),

le moyen de comparaison (89) étant apte à émettre une valeur de gain à destination de l'amplificateur (83) et une valeur logique à destination du commutateur (86) en fonction de la comparaison du signal émis par la sortie (87) aux valeurs de seuil mémorisées dans des mémoires (91,93),

le commutateur (86) étant apte à émettre en sortie la valeur reçue du moyen de limitation de puissance (2) ou la valeur reçue de la cartographie (16) en fonction de la valeur logique reçue, de sorte à économiser le calcul du moyen de limitation de puissance (2) lorsqu'une valeur de gain non nulle est émise par le moyen de comparaison (89) à destination de l'amplificateur (83).

2. Système selon la revendication 1, dans lequel le moyen de régulation (3) en température est apte à déterminer un signal de commande en fonction de la mesure de température du fluide caloporteur de l'organe de chauffage électrique, de la consigne de température du fluide caloporteur de l'organe de chauffage électrique et de la limitation du signal de commande.

3. Système selon la revendication 2, dans lequel le moyen de régulation (3) en température comprend une régulation PID.

4. Système selon l'une quelconque des revendications 1 à 3, dans lequel le moyen de limitation de puissance (2) est relié en série au moyen de régulation (3) en température.

5. Système selon l'une quelconque des revendications 1 à 3, dans lequel le moyen de limitation de puissance (2) est relié en parallèle au moyen de régulation (3) en température.

6. Procédé de commande d'un organe de chauffage électrique équipant un véhicule automobile comprenant un organe de chauffage électrique, l'organe de chauffage électrique comprenant un circuit de fluide caloporteur, dans lequel on élabore un signal de commande en fonction d'une mesure de température du fluide caloporteur de l'organe de chauffage électrique, d'une consigne de température du fluide caloporteur de l'organe de chauffage électrique et dans lequel on détermine une limitation du signal de commande en fonction d'une mesure de puissance de l'organe de chauffage électrique et d'une puissance autorisée de l'organe de chauffage électrique, ledit procédé étant **caractérisé en ce que** la limitation du signal de commande est déterminée soit en fonction d'une cartographie de signal de commande dépendant de la puissance de l'organe de chauffage électrique dont la valeur de sortie est amplifiée par un gain fonction de la puissance de l'organe de chauffage électrique et de la puissance de l'organe de chauffage électrique ayant servi à établir la cartographie,

soit en déterminant un gain fonction de la comparaison de la limitation du signal de commande émise à destination de l'organe de chauffage à des valeurs de puissance mémorisées, et en choisissant, lorsque le gain est nul, un signal de commande égal au signal provenant d'un moyen de limitation de puissance ou en choisissant, , lorsque le gain est non nul, un signal de commande égal au signal issu d'une cartographie fonction d'un signal de puissance autorisée de l'organe de chauffage électrique amplifié par le gain déterminé..

**Patentansprüche**

1. System zur Steuerung einer elektrischen Heizkomponente, mit der ein Kraftfahrzeug ausgestattet ist, das mit einem Antriebsaggregat versehen ist, das mindestens einen Elektromotor umfasst, der an eine elektrische Batterie angeschlossen ist, wobei die elektrische Heizkomponente durch die Batterie gespeist wird, die ein Wärmeträgerfluid umfasst, **dadurch gekennzeichnet, dass** es ein Leistungsbegrenzungsmittel (2) zur Begrenzung der von der elektrischen Heizkomponente aufgenommenen Leistung und ein Temperaturregelungsmittel (3) umfasst, die zusammenwirken, um ein Steuersignal in Abhängigkeit von einer Temperaturmessung des Wärmeträgerfluids der elektrischen Heizkomponente und von einem Temperatursollwert des Wärmeträgerfluids der elektrischen Heizkomponente auszusenden,
wobei das Leistungsbegrenzungsmittel (2) geeignet ist, eine Begrenzung des Steuersignals in Abhängigkeit von einer Leistungsmessung der elektrischen Heizkomponente und von einer zulässigen Leistung der elektrischen Heizkomponente zu bestimmen,
wobei das System **dadurch gekennzeichnet ist, dass**:

entweder
das Leistungsbegrenzungsmittel (2) ein Mapping (16) des Steuersignals in Abhängigkeit von der Leistung der elektrischen Heizkomponente umfasst,
und einen Verstärker (23), der geeignet ist, das an das Mapping (16) ausgesendete Signal in Abhängigkeit von der Leistung der elektrischen Heizkomponente und von der Leistung der elektrischen Heizkomponente, die zum Erstellen des Mappings gedient hat, zu ändern,
oder
das Leistungsbegrenzungsmittel eine PID-Regelung umfasst, wobei ein erster Eingang (4) eine Leistungsmessung der elektrischen Heizkomponente trägt und ein zweiter Eingang (5) eine zulässige Leistung der elektrischen Heizkomponente trägt, wobei das System einen gesteuerten Verstärker (83) umfasst, der im Eingang mit dem zweiten Eingang (5) und im Ausgang mit einem Mapping (16) verbunden ist,
wobei das Mapping (16) im Ausgang mit einem geschalteten Eingang eines Umschalters (86) verbunden ist,
wobei ein anderer Eingang des Umschalters (86) mit dem Ausgang des Leistungsbegrenzungsmittels (2) verbunden ist,
wobei eine Zweigleitung (88) der Verbindung (87) im Ausgang des Umschalters (86) mit einem Eingang eines Vergleichsmittels (89) verbunden ist,
wobei das Vergleichsmittel (89) im Eingang mit Speichern (91, 93, 95) und mit einem umprogrammierbaren Speicher (97) über eine bidirektionale Verbindung (96) verbunden ist,
wobei die Speicher (91, 93, 95) einen ersten Schwellenwert, einen zweiten Schwellenwert, der größer als der erste Schwellenwert ist, und eine Schwellenwertdauer umfassen,
wobei der umprogrammierbare Speicher (97) einen gespeicherten Leistungswert umfasst,
wobei das Vergleichsmittel (89) im Ausgang mit der Steuerklemme des Verstärkers (83) und mit der Steuerklemme des Umschalters (86) verbunden ist,
wobei das Vergleichsmittel (89) geeignet ist, einen Verstärkungswert an den Verstärker (83) und einen logischen Wert an den Umschalter (86) auszusenden in Abhängigkeit vom Vergleich des vom Ausgang (87) ausgesendeten Signals mit den in Speichern (91, 93) gespeicherten Schwellenwerten,
wobei der Umschalter (86) geeignet ist, im Ausgang den vom Leistungsbegrenzungsmittel (2) empfangenen Wert oder den vom Mapping (16) empfangenen Wert in Abhängigkeit von dem empfangenen logischen Wert auszusenden, so dass die Berechnung des Leistungsbegrenzungsmittels (2) eingespart wird, wenn ein Verstärkungswert ungleich null vom Vergleichsmittel (89) an den Verstärker (83) ausgesendet wird.

2. System nach Anspruch 1, wobei das Temperaturregelungsmittel (3) geeignet ist, ein Steuersignal in Abhängigkeit von der Temperaturmessung des Wärmeträgerfluids der elektrischen Heizkomponente, vom Temperatursollwert des Wärmeträgerfluids der elektrischen Heizkomponente und von der Begrenzung des Steuersignals zu bestimmen.

3. System nach Anspruch 2, wobei das Temperaturregelungsmittel (3) eine PID-Regelung umfasst.

4. System nach einem der Ansprüche 1 bis 3, wobei ein Leistungsbegrenzungsmittel (2) in Reihe mit dem Temperaturregelungsmittel (3) verbunden ist.

5. System nach einem der Ansprüche 1 bis 3, wobei das Leistungsbegrenzungsmittel (2) parallel zum Temperaturregelungsmittel (3) verbunden ist.

6. Verfahren zur Steuerung einer elektrischen Heizkomponente, mit der ein Kraftfahrzeug ausgestattet ist, das eine elektrische Heizkomponente umfasst, wobei die elektrische Heizkomponente einen Wärmeträgerfluidkreislauf umfasst, bei dem ein Steuersignal in Abhängigkeit von einer Temperaturmessung des Wärmeträgerfluids der elektrischen Heizkomponente und von einem Temperatursollwert des Wärmeträgerfluids der elektrischen Heizkomponente bestimmt wird und bei dem eine Begrenzung des Steuersignals in Abhängigkeit von einer Leistungsmessung der elektrischen Heizkomponente und von einer zulässigen Leistung der elektrischen Heizkomponente bestimmt wird, wobei das Verfahren **dadurch gekennzeichnet ist, dass** die Begrenzung des Steuersignals bestimmt wird entweder in Abhängigkeit von einem Steuersignalmapping, das von der Leistung der elektrischen Heizkomponente abhängig ist, deren Ausgangswert durch einen Verstärkung verstärkt wird, die von der Leistung der elektrischen Heizkomponente und von der Leistung der elektrischen Heizkomponente, die zum Erstellen des Mappings gedient hat, abhängig ist,

oder indem eine Verstärkung bestimmt wird, die vom Vergleich der Begrenzung des Steuersignals, die an die Heizkomponente ausgesendet wird, mit gespeicherten Leistungswerten abhängig ist, und indem, wenn die Verstärkung null ist, ein Steuersignal gewählt wird, das gleich dem Signal ist, das von einem Leistungsbegrenzungsmittel kommt, oder indem, wenn der Gewinn ungleich null ist, ein Steuersignal gewählt wird, das gleich dem Signal ist, das aus einem Mapping stammt, das von einem Signal für die zulässige Leistung der elektrischen Heizkomponente abhängig ist, das durch die bestimmte Verstärkung verstärkt wird.

## Claims

1. Control system for an electric heating unit fitted in a motor vehicle equipped with a powertrain comprising at least one electric motor connected to an electric battery, the electric heating unit being powered by the battery comprising a heat-transfer fluid circuit, **characterized in that** it comprises a means (2) for limiting the power consumed by the electric heating unit and a temperature regulating means (3), cooperating in order to transmit a control signal as a function of a measurement of temperature of the heat-transfer fluid of the electric heating unit, and of a temperature setpoint for the heat-transfer fluid of the electric heating unit,

   the power limiting means (2) being able to determine a limiting of the control signal as a function of a measurement of power of the electric heating unit and of an authorized power level for the electric heating unit,

   said system being **characterized in that**:

   either
   the power limiting means (2) comprises a mapping (16) of the control signal as a function of the power of the electric heating unit,
   and an amplifier (23) able to modify the signal transmitted to the mapping unit (16) as a function of the power of the electric heating unit and of the power of the electric heating unit used to set up the mapping,
   or
   the power limiting means comprises PID control, a first input (4) carrying a measurement of power of the electric heating unit, a second input (5) carrying an authorized power level for the electric heating unit, the system comprising a controlled amplifier (83) connected at its input to the second input (5) and at its output to a mapping unit (16),
   the mapping unit (16) being connected at its output to a switched input of a switch (86),
   another input of the switch (86) being connected to the output of the power limiting means (2),
   a branch (88) off the connection (87) at the output of the switch (86) is connected to an input of a comparison means (89),
   the comparison means (89) being connected at its input to memories (91, 93, 95) and to a reprogrammable memory (97) via a bidirectional connection (96),
   the memories (91, 93, 95) comprising a first threshold, a second threshold greater than the first threshold and a threshold duration,
   the reprogrammable memory (97) comprising a stored power value,
   the comparison means (89) being connected at its output to the control terminal of the amplifier (83) and to the control terminal of the switch (86),
   the comparison means (89) being able to transmit a gain value to the amplifier (83) and a logic value to the switch (86) as a function of the comparison of the signal transmitted by the output (87) with the threshold values stored in memories (91, 93),
   the switch (86) being able to transmit at its output the value received from the power limiting means (2) or the value received from the mapping unit (16) as a function of the received logic value, so as to provide economy in the computing of the power limiting means (2) when a non-zero gain value is transmitted by the comparison means (89) to the amplifier (83).

2. System according to Claim 1, in which the temperature regulating means (3) is able to determine a control signal as a function of the measurement of temperature of the heat-transfer fluid of the electric heating unit, of the temperature setpoint for the heat-transfer fluid of the electric heating unit, and of the limiting of the control signal.

3. System according to Claim 2, in which the temperature regulating means (3) comprises PID control.

4. System according to any one of Claims 1 to 3, in which the power limiting means (2) is connected in series with the temperature regulating means (3).

5. System according to any one of Claims 1 to 3, in which the power limiting means (2) is connected in parallel with the temperature regulating means (3).

6. Control method for an electric heating unit fitted in a motor vehicle comprising an electric heating unit, the electric heating unit comprising a heat-transfer fluid circuit, in which a control signal is worked out as a function of a measurement of temperature of the heat-transfer fluid of the electric heating unit, and of a temperature setpoint for the heat-transfer fluid of the electric heating unit and in which a limiting of the control signal is determined as a function of a measurement of power of the electric heating unit and of an authorized power level for the electric heating unit, said method being **characterized in that** the limiting of the control signal is determined

either as a function of a control signal mapping depending on the power of the electric heating unit whose output value is amplified by a gain that is a function of the power of the electric heating unit and of the power of the electric heating unit used to set up the mapping,
or by determining a gain that is a function of the comparison of the limiting of the control signal transmitted to the heating unit with stored power values, and by choosing, when the gain is zero, a control signal equal to the signal coming from a power limiting means or by choosing, when the gain is non-zero, a control signal equal to the signal coming from a mapping that is a function of an authorized power level signal for the electric heating unit amplified by the determined gain.

# FIG.1

# FIG.2

# FIG.3

EP 2 655 107 B1

FIG.4

FIG.5

**EP 2 655 107 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6040561 A
- WO 9415805 A
- FR 2802151